# EUROPÄISCHE PATENTSCHRIFT

(11) **EP 0 507 265 B1**
(45) Veröffentlichungstag und Bekanntmachung des Hinweises auf die Patenterteilung: **19.07.1995**
(21) Anmeldenummer: 92105584.4
(22) Anmeldetag: 01.04.1992
(51) Int. Cl.: B23K 28/00

(54) **Verfahren und Vorrichtung zum thermischen Trennen von Werkstücken**
Procedure of and device for thermally cutting workpieces
Procédé et dispositif pour couper des pièces d'oeuvre thermiquement

(30) Priorität: 04.04.1991 DE 4110805
(43) Veröffentlichungstag der Anmeldung: 07.10.1992
(73) Patentinhaber: DÖRRIES SCHARMANN GmbH, D-41236 Mönchengladbach (DE)
(72) Erfinder: Rothe, Rüdiger Dr.-Ing., W-2820 Bremen 70 (DE); Louis, Ralf Dipl.-Ing., W-5372 Schleiden (DE)
(74) Vertreter: Rehders, Jochen, Dipl.-Ing.

(56) Entgegenhaltungen:
- DD-B- 244 512
- US-A- 3 713 636

## Beschreibung

Die Erfindung betrifft ein Verfahren und eine Vorrichtung zum thermischen Trennen von Werkstücken wie Platten aus schmelzbarem oder thermisch zersetzbarem Material mittels eines auf eine Temperatur oberhalb der Schmelz- oder Zersetzungstemperatur des zu trennenden Werkstücks gebrachten Flüssigkeitsstrahls.

Zum thermischen Trennen von Werkstücken werden verschiedene Verfahren industriell eingesetzt, z. B. das autogene Brennschneiden, das Plasmaschneiden und das Laserstrahlschneiden.

Beim autogenen Brennschneiden, das ohne besondere Maßnahmen nur für Stahl einsetzbar ist, erfolgt die Erwärmung hauptsächlich über eine chemische Reaktion, deren Geschwindigkeit von der Diffusionsgeschwindigkeit der Reaktionspartner abhängt. Von der Reaktionsgeschwindigkeit hängt wiederum die Schneidgeschwindigkeit ab, die für den Werkstoff Baustahl in einem großen Dickenbereich zwischen 0,5 m/min bis 1,5 m/min beträgt. Die Schnittfugen sind hierbei unterschiedlich breit bis zu einigen Millimetern.

Beim Plasmaschneiden erfolgt die Energiezufuhr über einen elektrischen Lichtbogen (Plasma) mit einer hohen elektrischen Leistung bis zu mehr als 100 kW. Der erwärmte Werkstoff wird mit Hilfe des Plasmastrahls durch Impulsübertragung aus dem Schnittfugenbereich entfernt. Die Schneidgeschwindigkeiten beim Plasmaschneiden sind bei kleinen Schnittdicken höher als beim autogenen Brennschneiden, jedoch sind die Schnittfugen mit 3 mm bis 10 mm Breite recht breit, was die Genauigkeit des Schnitts beeinträchtigt.

Beim Laserstrahlschneiden wird die Energie durch einen Laserstrahl aufgebracht und der aufgeschmolzene oder verdampfte Werkstoff mittels eines Gasstrahls aus der Schnittfuge entfernt. Das Laserstrahlschneiden ergibt vorteilhaft schmale Schnittfugen und damit eine hohe Genauigkeit bei hoher Schneidgeschwindigkeit und einer geringen Wärmebeanspruchung des zu trennenden Werkstücks. Bei größeren Schnittdicken, z. B. bei Stahl oberhalb von 10 mm, abhängig von der Schnittfugenbreite, ist es nicht mehr möglich, mit der vom Laserstrahl als Leistungsträger bestimmten hohen Schnittgeschwindigkeit zu arbeiten, da sich bei der erforderlichen hohen Strömungsgeschwindigkeit des zum Abtransport der Schmelze verwendeten Gasstrahls nach einigen Millimetern Eindringtiefe im Schnittspalt eine Überschallströmung von der Schneidfront löst und dadurch die effektive Gasgeschwindigkeit dort, wo sie hoch sein sollte, entsprechend geringer wird. Beim Laserstrahlschneiden ist somit die Schneidgeschwindigkeit in dickeren Werkstücken dadurch begrenzt, daß sich mit einem Gasstrahl ein hoher Impuls nur unzulänglich übertragen läßt. Ein Medium mit höherer Dichte als Gas, z. B. eine Flüssigkeit, mit der sich ein größerer Impuls transportieren ließe, läßt sich beim Laserstrahlschneiden nicht einsetzen, da Licht mit der Wellenlänge eines CO₂ -Lasers in allen in Frage kommenden Flüssigkeit absorbiert wird.

In der DDR-Patentschrift 244 512 und der US-Patentschrift 3 713 636 sind ein Verfahren und eine Vorrichtung zum aluminothermischen Trennen von Metallprofilen beschrieben, bei denen in einem Reaktionsbehälter ein aluminothermisches Gemisch gezündet und die nach dem Abbrennen vorhandenen Schmelzkomponenten als Schmelzstrahl auf die Trennstelle geleitet werden. Bei der Vorrichtung gemäß dem US-Patent 3 713 636 wird die Schmelze in einer Düse auf hohe Geschwindigkeit gebracht, so daß das Trennen nicht nur durch das Schmelzen, sondern auch durch die in der Schmelze enthaltene kinetische Energie bewirkt wird.

Der Erfindung liegt die Aufgabe zugrunde, ein Verfahren zum thermischen Trennen von Werkstücken der eingangs erwähnten Art so zu verbessern, daß es sich im wesentlichen kontinuierlich über längere Zeiträume durchführen läßt, um auf diese Weise auch lange Schnitte in Werkstücken durchführen zu können. Des weiteren soll sich eine hohe Schnittgeschwindigkeit auch bei großen Schnittdicken bei schmalen Schnittfugen erzielen lassen, und die einzusetzende Vorrichtung soll einfach aufgebaut und handhabbar sein.

Ausgehend von dieser Aufgabenstellung wird bei einem Verfahren der eingangs erwähnten Art vorgeschlagen, daß erfindungsgemäß ein Metalldraht oder Metallstab mit durch Antriebsmittel bestimmter Geschwindigkeit abgedichtet in eine Kokille eingeführt, in der Kokille geschmolzen und die Schmelze als Flüssigkeitsstrahl durch eine Düse aus der Kokille mittels des als Kolben wirkenden, nicht geschmolzenen Drahts oder Stabs ausgetrieben wird. Die Geschwindigkeit des Schmelzestrahls läßt sich auf einfache Weise dadurch gegenüber der Geschwindigkeit in die Kokille eingeführten Drahts oder Stabes erhöhen, daß der Düsenquerschnitt für den Schmelzestrahl kleiner als der Querschnitt des Drahts oder des Stabes ausgebildet wird.

Die Erfindung geht von der Überlegung aus, daß sich mit Flüssigkeiten aufgrund ihrer hohen Dichte ein größerer Impuls transportieren läßt als mit Gasen. Wird die Flüssigkeit so hoch erhitzt, daß ihre Temperatur oberhalb der Schmelz- oder Zersetzungstemperatur des Materials des zu trennenden Werkstücks liegt, läßt sich mittels des Flüssigkeitsstrahls auch die thermische Energie in den Schneidspalt einführen, wo das Material des zu trennenden Werkstücks aufgrund dieser Energiezufuhr thermisch schmilzt oder sich zersetzt und durch den Flüssigkeitsstrahl aus dem Schneidspalt ausgetragen wird. Da die Schallgeschwindigkeit in einer Flüssigkeit sehr hoch liegt, läßt sich dem Flüssigkeitsstrahl eine sehr hohe Geschwindigkeit erteilen, ohne in den Bereich der Schallgeschwindigkeit und der damit verbundenen Gefahr der Ablösung von Schockwellen zu gelangen.

Je nach der Temperatur, bei der das zu trennende Werkstück schmilzt oder sich thermisch zersetzt, lassen sich unterschiedliche Flüssigkeitsstrahlen verwenden.

Die Zum thermischen Trennen von höher schmelzenden Materialien wie Metallen, insbesondere Stahl, verwendete Metallschmelze kann Vorzugsweise auf eine Temperatur oberhalb der Schmelztemperatur überhitzt sein.

Es ergibt sich somit, daß sich für den Flüssigkeitsstrahl ein vom zu trennenden Material unterschiedliches Material oder das gleiche Material verwenden läßt. Des weiteren kann der Flüssigkeitsstrahl aus einem mit dem zu trennenden Material exotherm reagierenden Material bestehen, wodurch für eine zusätzliche Wärmezufuhr in den Schneidspalt gesorgt wird.

Andererseits ist es auch möglich, für den Flüssigkeitsstrahl ein mit dem zu trennenden Material im Sinne einer Schmelzpunkterniedrigung reagierendes Material zu verwenden. Dies ist z. B. gegeben, wenn der Flüssigkeitsstrahl aus einer Metallschmelze besteht, die mit dem zu trennenden Material ein Eutektikum mit niedrigerem Schmelzpunkt bilden kann.

Dem Flüssigkeitsstrahl kann bevorzugterweise eine hohe Geschwindigkeit, jedoch unterhalb der Schallgeschwindigkeit in der Flüssigkeit, vorzugsweise eine Geschwindigkeit von 150 m/sec erteilt werden, wodurch sich bei einem Strahldurchmesser von 0,3 mm eine hohe Wärmeleistungszufuhr und ein hoher Impuls des Flüssigkeitsstrahls erreichen lassen.

Eine Vorrichtung zur Durchführung des Verfahrens kann aus einer Kokille aus hitzebeständigem Material mit einer Eintrittsöffnung für einen in der Eintrittsöffnung abgedichtet geführten, durch Antriebsrollen vorschiebbaren Metalldraht oder Metallstab, einer Erwärmungsvorrichtung im Bereich der Kokille zum Schmelzen des Draht- oder Stabendes in der Kokille und mit einer Austrittsdüse für einen Metallschmelzestrahl gebildet sein. Vorzugsweise kann der Querschnitt der Düse kleiner als der Draht- oder Stabquerschnitt sein. Mit einer solchen Vorrichtung läßt sich auf einfache Weise ein kontinuierlicher Metallschmelzestrahl erzeugen, da der in die Kokille eingeführte Metalldraht oder Metallstab als Druckkolben wirkt, an seinem vorderen Ende abschmilzt und diese Schmelze aus der Düse mit hoher Geschwindigkeit und hoher Temperatur ausgetrieben wird.

Die Erwärmungsvorrichtung kann mit Flammen, hochenergetischen Lichtstrahlen, elektrischen Lichtbögen, direkter oder indirekter elektrischer Widerstandsheizung oder mit induktiver Erhitzung arbeiten, um die Wärmeenergie in das Material für den Schneidstrahl einzukoppeln. Zusätzlich läßt sich der Strahl durch elektrischen Strom (Widerstandsheizung) überhitzen.

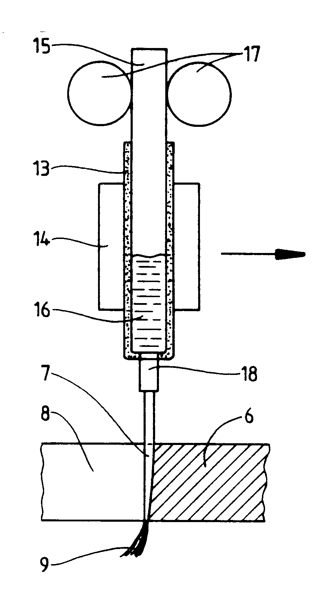

Die Erfindung wird nachstehend anhand eines in der Zeichnung dargestellten Ausführungsbeispiels des näheren erläutert.

Die Vorrichtung besteht aus einer Kokille 13, die rohrförmig gestaltet ist und in die ein Metalldraht oder Metallstab 15 mittels Antriebsrollen 17 eingeführt wird. Im dargestellten Beispiel weist die Kokille 13 einen Innendurchmesser auf, der im wesentlichen gleich dem Außendurchmesser des Metalldrahts oder Metallstabs 15 ist, jedoch kann die Kokille auch als Behälter ausgebildet sein, wenn der Metalldraht oder Metallstab 15 durch eine entsprechende Einführöffnung abgedichtet hineintransportiert wird. Um die Kokille 13 ist eine Erwärmungsvorrichtung 14 angeordnet, die den Metalldraht oder Metallstab 15 an seinem vorderen Ende aufschmilzt und über Schmelztemperatur erhitzt, so daß sich im Bereich vor einer Austrittsdüse 18 in der Kokille 13 Metallschmelze 16 befindet. Diese Metallschmelze 16 wird mittels des als Kolben wirkenden Metalldrahts oder Metallstabs 15, der durch die Antriebsrollen 17 angetrieben ständig in die Kokille 13 hineingetrieben wird, aus der Düse 18 mit hoher Geschwindigkeit ausgetrieben. Die Austrittsgeschwindigkeit ist proportional dem Verhältnis des Querschnitts des Metalldrahts oder Metallstabs 15 zum Querschnitt der Düse 18. Dies bedeutet, daß sich auf einfache Weise eine hohe Austrittsgeschwindigkeit erreichen läßt. Wenn der Drahtdurchmesser z. B. 3 mm und der Düsendurchmesser 0,3 mm beträgt, ergibt sich eine Austrittsgeschwindigkeit der Schmelze 16 aus der Düse 18, die das 100fache der Vorschubgeschwindigkeit des Metalldrahts oder Metallstabs 15 ist. Will man eine Austrittsgeschwindigkeit von 150 m/sec erreichen, genügt eine Vorschubgeschwindigkeit des Metalldrahts bzw. des Metallstabs 15 von nur 1,5 m/sec. Vorteilhaft ist des weiteren, daß sich die Abdichtung des Metalldrahts oder Metallstabs 15 in der Kokille 13 ohne besondere Maßnahmen ergibt, da die Schmelze 16 einen etwaig vorhandenen Spalt zwischen dem Metalldraht bzw. Metallstab 15 und der Kokille 13 ausfüllt und zur Eintrittsöffnung hin erstarrt, ohne daß dadurch eine wesentliche Behinderung der Eintrittsbewegung des Metalldrahts bzw. Metallstabs 15 in die Kokille 13 eintritt, wenn für die Kokille 13 ein geeignetes Material gewählt und ggf. für eine geeignete Schmierung gesorgt wird.

Die Erwärmungsvorrichtung 14 ist schematisch als die Kokille 13 umgebende Vorrichtung dargestellt. Es kann sich um eine elektrische Widerstandsheizung handeln. Ebenso ist die Verwendung einer Induktionsspule zum induktiven Erwärmen von Metall in der Kokille 13 möglich. Des weiteren läßt sich das Material in der Kokille 13 direkt mit Flammen, hochenergetischen Lichtstrahlen oder elektrischen Lichtbögen beaufschlagen, um in der Kokille 13 befindliches Metall aufzuschmelzen und über die Schmelztemperatur zu erhitzen. Schließlich ist auch eine direkte oder indirekte elektrische Widerstandsheizung möglich.

Von der Kokille gelangt die erhitzte Flüssigkeit (Metallschmelze) zu der Düse 18, die oberhalb des zu trennenden Werkstücks 6 angeordnet ist. Mittels eines aus der Düse 18 austretenden erhitzten Flüssigkeitsstrahls 7, (Metallschmelzestrahls), wird das Material des Werkstücks 6 geschmolzen oder thermisch zersetzt und über den Impuls im Flüssigkeitsstrahl 7 aus der so gebildeten Schnittfuge 8 ausgetragen. Aus der Schnittfuge 8 tritt somit ein Strahl 9 aus, der aus einem Gemisch aus dem Material des Flüssigkeitsstrahls und des geschmolzenen oder thermisch zersetzten Werkstoffs besteht. Der Flüssigkeitsstrahl 7 wird relativ zum Werkstück 6 bewegt.

Ein Schmelzestrahl aus Stahl von 0,3 mm Durchmesser und mit einer Strahlgeschwindigkeit von 150 m/sec führt bei einer Überhitzung von 200° C über die Schmelztemperatur eine thermische Leistung von etwa 125 kW mit sich, was einer Leistungsflußdichte von etwa 1,8 x 10⁸ W/cm² entspricht. Die latente Wärmeleistung in der Schmelze, die hiervon direkt zum Schmelzen des zu trennenden Werkstoffs, z. B. Stahl, verfügbar ist, beträgt 12 kW. Von dieser Leistung mit der entsprechend hohen Leistungsflußdichte läßt sich ein hoher Wärmeanteil zum Schneiden nutzen. Des weiteren ist der Schneidstrahlimpuls bei der angegebenen Strahlgeschwindigkeit sehr hoch, obwohl die Strahlgeschwindigkeit unter der Schallgeschwindigkeit der Schmelze liegt. Eine Einkoppelung des Impulses in den Schneidspalt zum Abtransport des geschmolzenen Werkstoffs ist daher problemlos möglich, auch wenn die Schnittfuge sehr schmal entsprechend dem Strahldurchmesser ist. Die Schneidgeschwindigkeit kann sehr hoch sein und ergibt sich aus der Impuls- und Leistungsbilanz.

Die Metalle für den Flüssigkeitsstrahl können so ausgewählt sein, daß chemischen Reaktionen zum Freisetzen exothermer Energie oder zur Erniedrigung der Schmelztemperatur oder zum Verhindern des Entstehens eines Schneidbartes oder zum leichten Entfernen des Schneidbartes stattfinden.

Mit dem erfindungsgemäßen Verfahren lassen sich thermisch instabile Werkstoffe wie Kunststoffe oder auch Verbundwerkstoffe trennen, wenn die Temperatur des Flüssigkeitsstrahls oberhalb der Schmelz- oder Zersetzungstemperatur des entsprechenden Werkstoffs liegt.

## Patentansprüche

1. Verfahren zum thermischen Trennen von Werkstücken (6) wie Platten aus schmelzbarem oder thermisch zersetzbarem Material mittels eines auf eine Temperatur oberhalb der Schmelz- oder Zersetzungstemperatur des zu trennenden Werkstücks gebrachten Flüssigkeitsstrahls (7), **dadurch gekennzeichnet**, daß ein Metalldraht oder Metallstab (15) mit durch Antriebsmittel bestimmter Geschwindigkeit abgedichtet in eine Kokille (13) eingeführt, in der Kokille geschmolzen und die Schmelze als Flüssigkeitsstrahl (7) durch eine Düse (18) aus der Kokille (13) mittels des als Kolben wirkenden, noch nicht geschmolzenen Drahts oder Stabs (15) ausgetrieben wird.

2. Verfahren nach Anspruch 1, **dadurch gekennzeichnet**, daß die Geschwindigkeit des Schmelzestrahls (7) höher als die des in die Kokille (13) eingeführten Drahts oder Stabs (15) ist.

3. Verfahren nach Anspruch 1 oder 2, **dadurch gekennzeichnet**, daß der Flüssigkeitsstrahl (7) auf eine hohe Geschwindigkeit unterhalb der Schallgeschwindigkeit in der Flüssigkeit gebracht wird.

4. Verfahren nach einem der Ansprüche 1 bis 3, **dadurch gekennzeichnet**, daß der Flüssigkeitsstrahl (7) eine Geschwindigkeit von 150 m/sec und einen Durchmesser von 0,3 mm aufweist.

5. Verfahren nach einem der Ansprüche 1 bis 4, **gekennzeichnet durch** die Verwendung eines vom zu trennenden Material unterschiedlichen Materials für den Flüssigkeitsstrahl (7).

6. Verfahren nach einem der Ansprüche 1 bis 5, **gekennzeichnet durch** die Verwendung eines mit dem zu trennenden Material exotherm reagierenden Materials für den Flüssigkeitsstrahl (7).

7. Verfahren nach einem der Ansprüche 1 bis 5, **gekennzeichnet durch** die Verwendung eines mit dem zu trennenden Material im Sinne einer Schmelzpunkterniedrigung reagierenden Materials für den Flüssigkeitsstrahl (7).

8. Verfahren nach Ansprüche einem der 1 bis 7, **dadurch gekennzeichnet**, daß die Metallschmelze (16) auf eine Temperatur oberhalb der Schmelztemperatur überhitzt ist.

9. Vorrichtung zur Durchführung des Verfahrens nach Anspruch 1 sowie einem oder mehreren der Ansprüche 2 bis 8, **gekennzeichnet durch** eine Kokille (13) aus hitzebeständigem Material mit einer Eintrittsöffnung für einen in der Eintrittsöffnung abgedichtet geführten, durch Antriebsrollen (17) vorschiebbaren Metalldraht oder -stab (15), einer Erwärmungsvorrichtung (14) im Bereich der Kokille (13) zum Schmelzen des Drahts- oder Stabendes in der Kokille (13) und mit einer Austrittsdüse (18) für einen Metallschmelzedraht (7).

10. Vorrichtung nach Anspruch 9, **dadurch gekennzeichnet**, daß der Querschnitt der Düse (18) kleiner als der Draht- oder Stabquerschnitt ist.

11. Vorrichtung nach Anspruch 9, oder 10, **gekennzeichnet durch** eine mit Flammen, hochenergetischen Lichtstrahlen, elektrischen Lichtbögen, direkter oder indirekter elektrischer Widerstandsheizung oder mit induktiver Erhitzung arbeitende Erwärmungsvorrichtung (2, 14).

## Claims

1. Process for the thermal cutting of components (6) such as plates made of meltable or thermally decomposable material by means of a jet of liquid (7) heated to a temperature above the melting or decomposition temperature of the component to be cut, **characterised in that** a metal wire or metal rod (15) is inserted and packed into a mould (13) at a speed determined by driving means, the wire or rod (15) is melted in the mould and the melt is driven out of the mould (13) as a jet of molten liquid through a nozzle (18) by means of the wire or rod (15) which has not yet melted and operates as a piston.

2. Process according to claim 1, **characterised in that** the speed of the jet of molten liquid (7) is higher than that of the wire or rod (15) inserted into the mould (13).

3. Process according to claim 1 or 2, **characterised in that** the jet of molten liquid (7) is driven at a high speed which is lower than the sonic speed in the molten liquid.

4. Process according to one of claims 1 to 3, **characterised in that** the jet of molten liquid (7) has a speed of 150 m/sec and a diameter of 0.3 mm.

5. Process according to one of claims 1 to 4, **characterised by** the use of a material for the jet of molten liquid (7) that is different from the material to be cut.

6. Process according to one of claims 1 to 5, **characterised by** the use of a material for the jet of molten liquid (7) that reacts exothermically with the material to be cut.

7. Process according to one of claims 1 to 5, **characterised by** the use of a material for the jet of molten liquid (7) that reacts with the material to be cut by lowering the melting point.

8. Process according to one of claims 1 to 7, **characterised in that** the molten metal (16) is overheated to a temperature above its melting temperature.

9. Device for executing the process according to claim 1 as well as one or several of claims 2 to 8, **characterised by** a mould (13) made of a heat resistant material having an inlet opening for the wire or rod (15) which is packed into the inlet opening and can be pushed forward by drive rollers (17), a heating device (14) in the area of the mould (13) for melting the wire or rod end in the mould (13) and an exit nozzle (18) for molten metal wire (7).

10. Device according to claim 9, **characterised in that** the cross section of the nozzle (18) is smaller than the cross section of the wire or rod.

11. Device according to claim 9 or 10, **characterised by** having a heating device (2, 14) which operates with combustion flames, high-energy light beams, electrical arcs, direct or indirect electrical resistance heating or inductive heating.

## Revendications

1. Procédé de coupe thermique de pièces à usiner (6) telles que des plaques, dans un matériau fusible ou thermiquement décomposable, au moyen d'un jet liquide (7) amené à une température supérieure à la température de fusion ou de décomposition de la pièce à découper, caractérisé en ce qu'un fil métallique ou une barre métallique (15) est introduit, de manière étanche, dans une coquille (13), par des moyens d'entraînement de vitesse déterminée, est fondu dans la coquille et le matériau en fusion est chassé de la coquille sous la forme d'un jet liquide (7), à travers une buse (18), au moyen du fil ou de la barre (15) non encore fondu, agissant comme un piston.

2. Procédé selon la revendication 1, caractérisé en ce que la vitesse du jet en fusion (7) est supérieure à celle du fil ou de la barre (15) introduit dans la coquille (13).

3. Procédé selon la revendication 1 ou 2, caractérisé en ce que le jet liquide (7) est amené à une vitesse élevée, inférieure à la vitesse du son dans le liquide.

4. Procédé selon l'une des revendications 1 à 3, caractérisé en ce que le jet liquide (7) présente une vitesse de 150 m/s et un diamètre de 0,3 mm.

5. Procédé selon l'une des revendications 1 à 4, caractérisé par l'utilisation pour le jet liquide (7) d'un matériau différent du matériau à découper.

6. Procédé selon l'une des revendications 1 à 5, caractérisé par l'utilisation, pour le jet liquide (7), d'un matériau réagissant de manière exothermique avec le matériau à découper.

7. Procédé selon l'une des revendications 1 à 5, caractérisé par l'utilisation, pour le jet liquide (7), d'un matériau réagissant avec le matériau à découper, dans le sens d'un abaissement du point de fusion.

8. Procédé selon l'une des revendications 1 à 7, caractérisé en ce que le métal en fusion (7) est surchauffé à une température supérieure à la température de fusion.

9. Dispositif pour la mise en oeuvre du procédé selon la revendication 1 ainsi que selon une ou plusieurs des revendications 2 à 8, caractérisé par une coquille (13) en matériau résistant à la chaleur avec un orifice d'entrée pour un fil métallique ou une barre métallique (15), guidé de manière étanche dans l'orifice d'entrée, poussé vers l'avant par des rouleaux d'entraînement (17), par un dispositif de chauffage (14) dans la région de la coquille (13), pour la fusion de l'extrémité du fil ou de la barre dans la coquille (13) et avec une buse de sortie (18) pour un fil de métal en fusion (7).

10. Dispositif selon la revendication 9, caractérisé en ce que la section transversale de la buse (18) est inférieure à la section transversale du fil ou de la barre.

11. Dispositif selon la revendication 9 ou 10, caractérisé par un dispositif de chauffage (2, 14) fonctionnant avec flammes, faisceaux lumineux de grande énergie, arcs électriques, chauffage par résistance électrique direct ou indirect ou avec chauffage inductif.
